# EUROPÄISCHE PATENTSCHRIFT

(11) **EP 1 431 351 B1**
(45) Veröffentlichungstag und Bekanntmachung des Hinweises auf die Patenterteilung: **08.03.2006**
(21) Anmeldenummer: 03027593.7
(22) Anmeldetag: 02.12.2003
(51) Int. Cl.: C09C 1/30, C09C 1/36, C09C 3/06, C09D 1/00, C09D 11/02, A61K 8/25, C08K 3/00, C08K 7/16

(54) **Anorganische sphärische Absorptionspigmente**
Spherical inorganic absorption pigments
Pigments inorganiques et de forme sphérique

(30) Priorität: 17.12.2002 DE 10259246
(43) Veröffentlichungstag der Anmeldung: 23.06.2004
(73) Patentinhaber: Merck Patent GmbH, 64293 Darmstadt (DE)
(72) Erfinder: Heider, Lilia, Dr., Winchester SO22 4HZ (GB); Knapp, Martin, 64807 Dieburg (DE); Lenz, Gisela, 64521 Gross-Gerau (DE); Rick, Norbert, 64291 Darmstadt (DE)

(56) Entgegenhaltungen:
- EP-A- 1 063 265
- EP-B- 0 593 493
- WO-A-94/21733
- WO-A-98/11865
- DE-A- 19 842 134

## Beschreibung

Die vorliegende Erfindung betrifft anorganische sphärische Absorptionspigmente, die eine bimodale Partikelgrößenverteilung, mindestens eine farbgebende Schicht und eine finale SiO₂-Schicht aufweisen, sowie deren Verwendung in Farben, Lacken, Druckfarben, Sicherheitsdruckfarben, Kunststoffen, keramischen Materialien, Gläsern, als Tracer, in kosmetischen Formulierungen und zur Herstellung von Pigmentpräparationen und Trockenpräparaten.

Anorganische Absorptionspigmente müssen vor ihrer Anwendung im zu pigmentierenden System in eine Form gebracht werden, die eine leichte Dispergierung und eine reproduzierende Farbe ermöglicht. Diese Vorbehandlungen der Pigmente, beispielsweise Mahlen, die entscheidend die Qualität des Endproduktes beeinflussen, sind zeitaufwendig und teuer. Nachteilig ist weiterhin, dass beim Benetzen die Farbe des Pigments verändert wird. Für kosmetische Formulierungen müssen die Pigmente zusätzlich ein gutes Hautgefühl besitzen, welches die klassischen Absorptionspigmente nur in geringem Umfang zeigen.

Anorganische Absorptionspigmente auf Basis sphärischer Teilchen, insbesondere SiO₂-Kugeln, werden zunehmend in der Kosmetik eingesetzt, da sie einerseits der menschlichen Haut ein natürliches Aussehen verleihen und andererseits Falten weitestgehend unsichtbar machen.

Anorganische sphärische Absorptionspigmente, die mit einer farbgebenden Schicht belegt sind, sind beispielsweise aus den Offenlegungsschriften JP 62-288662, JP 06-11872, JP 11-139926, JP 11-335240 und DE 199 29 109 bekannt.

In der WO 00/15720 wird ein Pigmentgemisch basierend auf sphärischen SiO₂-Partikeln mit hoher Lichtdiffusion offenbart, wobei ein Teil der SiO₂₋Kugeln mit TiO₂/SiO₂ und der andere Teil mit TiO₂ und Fe₂O₃ beschichtet ist.

Aus der WO 99/66883 werden mit Metalloxiden, wie Titan-, Eisen- oder Zinkoxid, beschichtete SiO₂-Kugeln beschrieben, die eine finale SiO₂₋Schicht aufweisen. Die so beschichteten SiO₂-Kugeln werden als Gemisch mit Interferenzpigmenten in kosmetischen Formulierungen eingesetzt.

Die aus dem Stand der Technik bekannten sphärischen Absorptionspigmente basierend auf SiO₂-Kugeln zeigen ein relativ gutes Hautgefühl und besitzen aber den Nachteil, dass sie ein zu geringes Deckvermögen aufweisen.

Aufgabe der vorliegenden Erfindung ist es daher sphärische Absorptionspigmente bereit zu stellen, die neben einem guten Hautgefühl gleichzeitig sehr gute optische Eigenschaften und ein hohes Deckvermögen aufweisen und sich auf einfache Art und Weise herstellen lassen.

Überraschenderweise wurde gefunden, dass sphärische Absorptionspigmente, die mindestens eine farbgebende Schicht, eine bimodale Partikelgrößenverteilung und eine finale SiO₂-Schicht besitzen, ein deutlich höheres Deckvermögen als die Absorptionspigmente aus dem Stand der Technik aufweisen. Durch die finale SiO₂-Schicht werden die optischen Eigenschaften der Pigmente in Farbe, Farbreinheit und Farbstärke deutlich erhöht.

Gegenstand der Erfindung sind daher sphärische Absorptionspigmente, die sich dadurch auszeichnen, dass sie
- eine Komponente A basierend auf sphärischen Teilchen mit einer Partikelgröße von 1 -100 nm, die mit einer oder mehreren farbgebenden Schichten belegt sind und eine Deckschicht aus SiO₂ aufweisen,
und
- eine Komponente B basierend auf sphärischen Teilchen mit einer Partikelgröße von 0,5 - 50 µm, die mit einer oder mehreren farbgebenden Schichten belegt sind und eine Deckschicht aus SiO₂ aufweisen,
enthalten.

Die erfindungsgemäßen sphärischen Absorptionspigmente zeigen gegenüber den bekannten Absorptionspigmenten
- eine höhere Farbreinheit
- ein besonders hohes Deckvermögen
- eine höhere Farbstärke
- verbessertes Hautgefühl
- verbesserte Verarbeitbarkeit
- leichtere Dispergierbarkeit

Gegenstand der Erfindung ist weiterhin die Verwendung der erfindungsgemäßen sphärischen Absorptionspigmente in Farben, Lacken, vorzugsweise in Industrielacken, Druckfarben, Sicherheitsdruckfarben, Kunststoffen, keramischen Materialien, Gläsern, als Tracer und insbesondere in kosmetischen Formulierungen. Weiterhin sind die erfindungsgemäßen Absorptionspigmente auch zur Herstellung von Pigmentpräparationen sowie zur Herstellung von Trockenpräparaten, wie z. B. Granulaten, Chips, Pellets, Würstchen, Briketts, etc., geeignet. Die Trockenpräparate finden insbesondere Anwendung in Druckfarben und in der Kosmetik.

Geeignete Basissubstrate sind alle dem Fachmann bekannten sphärischen Partikel, wie z.B. SiO₂-Kugeln, TiO₂-Kugeln, Glas-Kugeln, Glas-Hohlkugeln, polymer-Kugeln, z.B. Nylon-Kugeln, sowienanoskalige sphärische Metallpartikel z.B. aus Eisen, Gold oder Silber. Diese sphärischen Pigmente sind kommerziell erhältlich, z.B. von 3M, Bayer AG, Merck KGaA, bzw. diese können basierend auf nanotechnologischen Prozessen und Sol-Gel-Prozessen ziel- bzw. nutzungsgerecht hergestellt werden. Insbesondere bevorzugt handelt es sich bei den Basissubstraten von Komponente A und Komponente B um SiO₂-Kugeln. Die Basissubstrate von Komponente A und Komponente B können aber auch unterschiedlich sein.

Die nanoskaligen sphärischen Basissubstrate der Komponente A weisen Partikelgrößen im Bereich von 1-100 nm, vorzugsweise von 5-80 nm und insbesondere von 10-70 nm, auf. Bevorzugte nanoskalige Basissubstrate sind SiO₂-Kugeln, ferner TiO₂- und Glaskugeln.

Geeignete Basissubstrate für Komponente B besitzen Partikelgrößen von 0,5-50 µm, insbesondere von 0,8-40 µm und besonders bevorzugt von 1-30 µm. Bevorzugte Basissubstrate sind insbesondere SiO₂-Kugeln, femer TiO₂- und Glaskugeln.

Die Herstellung von sphärischen Pigmenten ist bekannt. So wird beispielsweise kugelförmiges Siliziumdioxid in der Regel hergestellt durch Hydrolyse organischer oder anorganischer Siliziumverbindungen in einem Emulsionsverfahren. Derartige Verfahren sind beispielsweise in DE 21 55 281, DE 26 10 852, GB 1 141 924 und EP 0 162 716 beschrieben. Kugelförmiges SiO₂ ist kommerziell erhältlich, z.B. unter der Marke Levasil® von Bayer oder Ronasphere® der Merck KGaA. Levasil® 200 besitzt Partikelgrößen von 10-80 nm, während Ronasphere® eine Partikelgröße von kleiner 20 µm aufweist.

Die Komponenten A und B können in jedem Verhältnis miteinander gemischt werden. Vorzugsweise beträgt das Verhältnis der beschichteten Substrate von Komponente A zu den beschichteten Substraten von Komponente B 10 : 1 bis 1 : 10, insbesondere 8 : 2 bis 5 : 5. Die Substrate von Komponente A und Komponente B können in Wasser und/oder einem organischen Lösemittel oder Lösemittelgemisch miteinander gemischt werden. Es ist auch möglich, sofem die Basissubstrate von Komponente A und von Komponente B eine identische farbige Belegung aufweisen, die Basissubstrate von Komponente A und Komponente B vorab zu mischen und anschließend gemeinsam zu belegen.

Die sphärischen Basissubstrate werden mit einer oder mehreren farbgebenden Schichten belegt. Vorzugsweise mit ein, zwei, drei, vier, fünf oder sieben Schichten, insbesondere mit einer oder zwei oder drei farbgebenden Schichten. Die Beschichtung der Basissubstrate von Komponente A und Komponente B kann in einem Eintopfverfahren oder jeweils getrennt erfolgen. Die Anzahl der Schichten auf den nanoskaligen Kugeln der Komponente A kann mit der Anzahl der farbgebenden Schichten der Komponente B gleich oder verschieden sein. Selbiges gilt für die Schichtenfolgen, die gleich oder verschieden sein können. Vorzugsweise sind sowohl die Anzahl der Schichten, die Zusammensetzung der Schichten als auch die Schichtenfolgen der Komponenten A und B identisch.

Der Massenanteil aller farbgebenden Schichten bei Komponente A beträgt vorzugsweise 65 bis 95 %, insbesondere 70 bis 80 %. Der Massenanteil aller farbgebenden Schichten beträgt bei Komponente B vorzugsweise 15 bis 65 %, insbesondere 20 bis 55 %.

Bei der farbgebenden Schicht handelt es sich vorzugsweise um eine oder mehrere Metalloxidschichten, Metallsulfidschichten, Metallnitridschichten, Metalloxynitridschichten, Metallschichten oder deren Gemische.

Vorzugsweise besteht die farbgebende Schicht aus TiO₂, ZrO₂, SnO₂, ZnO, BiOCl, Ce₂O₃, FeO(OH), Fe₂O₃, Fe₃O₄, TiFe₂O₅, Cr₂O₃, Fe₄[Fe(CN)₆]₃, Titansuboxiden (TiO₂ teilweise reduziert mit Oxidationszahlen von < 4 bis 2 wie die niederen Oxide Ti₃O₅, Ti₂O₃ bis zu TiO), Titanoxynitriden sowie Titannitrid, CoO, Co₃O₄, VO₂, V₂O₃, NiO, CoAl₂O₄, BiVO₄, Ce₂S₃, MoS₂, Al, Fe, Cr, Ag, Au, Pt, Pd bzw. Gemische oder Kombinationen davon. Die TiO₂-Schicht kann in der Rutil- oder in der Anatasmodifikation vorliegen, vorzugsweise handelt es sich um Anatas.

Vorzugsweise handelt es sich bei den farbgebenden Schichten um eine oder mehrere Metalloxidschichten, insbesondere um TiO₂, Fe₂O₃, Fe₃O₄, FeO(OH), wie z.B. TiFeO₃, TiFe₂O₅, Pseudobrookit oder deren Gemische. Insbesondere bevorzugt sind SiO₂-Kugeln, die mit TiO₂, Fe₂O₃, Fe₃O₄, FeO(OH) und/oder TiFe₂O₅ belegt sind.

Besonders bevorzugt weisen die Komponenten A und B folgende Schichtenfolgen auf:
sphärisches Basissubstrat + TiO₂ + SiO₂
sphärisches Basissubstrat + Fe₂O₃ + SiO₂
sphärisches Basissubstrat + FeO(OH) + SiO₂
sphärisches Basissubstrat + Fe₃O₄ + SiO₂
sphärisches Basissubstrat + TiFe₂O₅ + SiO₂
sphärisches Basissubstrat + Cr₂O₃ + SiO₂
sphärisches Basissubstrat + Ce₂S₃ + SiO₂
sphärisches Basissubstrat + TiO₂ + Fe₂O₃ + SiO₂
sphärisches Basissubstrat + TiO₂ + Fe₃O₄ + SiO₂
sphärisches Basissubstrat + TiO₂ + SiO₂ + TiO₂ + SiO₂
sphärisches Basissubstrat + TiO₂ + SiO₂ + Fe₂O₃ + SiO₂
sphärisches Basissubstrat + TiO₂ + Fe₄[Fe(CN)₆]₃ + SiO₂

Besonders bevorzugt sind Absorptionspigmente, die allein auf SiO₂-Kugeln basieren und wo die Komponente A und die Komponente B eine oder mehrere Metalloxidschichten, vorzugsweise aus der Gruppe TiO₂, Fe₂O₃ und Fe₃O₄, aufweisen. Insbesondere bevorzugt sind Absorptionspigmente, wo die farbgebende(n) Metalloxidschicht(en) von Komponente A und Komponente B identisch ist (sind).

Die erfindungsgemäßen Absorptionspigmente lassen sich auf verschiedene Art und Weisen relativ einfach herstellen. Sofern die Basissubstrate der Komponenten A und B eine identische Belegung aufweisen sollen, können die Basissubstrate zunächst gemischt und nachfolgend durch nasschemische Beschichtung oder im CVD- oder PVD-Verfahren mit einer farbgebenden Beschichtung belegt werden. Es ist weiterhin auch möglich die Basissubstrate der Komponenten A und B jeweils getrennt zu belegen, und nach beendeter Beschichtung im gewünschten Verhältnis zu mischen. Zur Vermeidung von Agglomeratbildung empfiehlt es sich häufig die Basissubstrate der Komponenten A und B getrennt mit der farbgebenden Schicht und einer finalen SiO₂₋Schicht zu belegen. Die Herstellung des Gemisches aus den Komponenten A und B erfolgt in der Regel aber nicht mit den getrockneten und gegebenenfalls geglühten beschichteten sphärischen Partikeln, sondern in der Form, dass die sphärischen Pigmente nach der Belegung mit SiO₂ in der Suspension verbleiben und die Pigmentsuspensionen miteinander vermischt werden. In der Regel wird die Suspension der Komponente A der Suspension der Komponente B zugesetzt und gerührt. Das erfindungsgemäße Absorptionspigment mit der bimodalen Partikelgrößenverteilung wird zuletzt abfiltriert, mit Wasser gewaschen, getrocknet und gegebenenfalls geglüht.

Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z. B. beschrieben in U.S. 3087828, U.S. 3087829, U.S. 3553001, DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017, DE 196 18 568, EP 0 659 843, oder auch in weiteren dem Fachmann bekannten Patentdokumenten und sonstigen Publikationen.

Bei der nasschemischen Beschichtung werden die sphärischen Basissubstrate in Wasser suspendiert und mit einem oder mehreren hydrolysierbaren Metallsalzen in einem für die Hydrolyse geeigneten pH-Wert versetzt, der so gewählt wird, dass die Metalloxide bzw. Metalloxid-hydrate direkt auf den Kugeln ausgefällt werden, ohne dass es zu Nebenfällungen kommt. Der pH-Wert wird üblicherweise durch gleichzeitiges Zudosieren einer Base oder Säure konstant gehalten. Anschließend werden die Pigmente abgetrennt, gewaschen und getrocknet, vorzugsweise bei 80-150 °C, insbesondere bei 90-120 °C, und gegebenenfalls geglüht, wobei die Glühtemperatur in Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Absorptionspigmente nach Aufbringen einzelner Beschichtungen abgetrennt, gewaschen und ggf. geglüht werden um dann zur Auffällung der weiteren Schichten wieder resuspendiert zu werden.

Weiterhin kann die Beschichtung auch in einem Wirbelbettreaktor durch Gasphasenbeschichtung erfolgen, wobei z. B. die in EP 0 045 851 und EP 0 106 235 zur Herstellung von Perlglanzpigmenten vorgeschlagenen Verfahren entsprechend angewendet werden können. Im Fall, dass die farbgebenden Schichten Fe₃O₄ oder andere reduzierte Oxidnitridtypen enthalten, kann ein Reduktionsschritt, z. B. Glühung in reduzierender Atmosphäre, als letzter Verfahrenschritt erforderlich sein.

Die Herstellung von Titansuboxid-Schichten kann z.B. erfolgen durch Reduktion der TiO₂-Schicht mit Ammoniak, Wasserstoff sowie auch Kohlenwasserstoffen und Kohlenwasserstoff/Ammoniak-Gemischen, wie z.B. beschrieben in EP-A-0 332 071, DE 19 51 696 und DE 19 51 697. Vorzugsweise findet die Reduktion bei 800 bis 1000 °C unter Formiergas (8 % H₂ / 92 % N₂) statt.

Für das Aufbringen der finalen SiO₂-Schicht wird bevorzugt das in der DE 196 18 569 beschriebene Verfahren verwendet. Zur Herstellung der SiO₂-Schicht wird vorzugsweise Natrium- oder Kaliumwasserglaslösung eingesetzt.

Der Farbton der sphärischen Absorptionspigmente kann in weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder messtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet, das fertige Absorptionspigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung auf die finale SiO₂-Schicht wird die chemische Stabilität weiter erhöht oder die Handhabung des Absorptionspigments, insbesondere die Einarbeitung in unterschiedliche Medien erleichtert. Zur

Verbesserung der Benetzbarkeit, Dispergierbarkeit und/oder Verträglichkeit mit den Anwendermedien können funktionelle Beschichtungen aus Al₂O₃ oder ZrO₂ oder deren Gemische auf die Pigmentoberfläche aufgebracht werden. Weiterhin sind organische Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493.

Die erfindungsgemäßen Absorptionspigmente sind mit einer Vielzahl von Farbsystemen kompatibel, vorzugsweise aus dem Bereich der Lacke, Farben und Druckfarben. Für die Herstellung der Druckfarben für z. B. den Tiefdruck, Flexodruck, Offsetdruck, Offsetüberdrucklackierung, ist eine Vielzahl von Bindern, insbesondere wasserlösliche Typen, geeignet, wie sie z. B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, sowie für Anwendungen im Agrarbereich, z. B. für Gewächshausfolien, sowie z. B. für die Farbgebung von Zeltplanen, geeignet.

Da die erfindungsgemäßen sphärischen Absorptionspigmente eine sehr reine Körperfarbe mit ungewöhnlich hohem Deckvermögen verbinden, lassen sich mit ihnen besonders wirksame Effekte in den verschiedenen Anwendungsmedien erzielen, z. B. in kosmetischen Formulierungen, wie z. B. Nagellacken, Lippenstiften, Presspudern, Gelen, Lotionen, Seifen, Zahnpasta, in Lacken, insbesondere Industrielacken und Pulverlacken, sowie in Kunststoffen und in der Keramik.

Aufgrund des guten Hautgefühls und der sehr guten Hautadhäsion sind die erfindungsgemäßen Absorptionspigmente insbesondere für die dekorative Kosmetik, aber auch für Personal Care Applications, wie z.B. Body Lotions, Emulsionen, Seifen, Shampoos, etc., geeignet.

Es versteht sich von selbst, dass für die verschiedenen Anwendungszwecke die erfindungsgemäßen Absorptionspigmente auch vorteilhaft in Abmischung mit Effektpigmenten, wie z.B. Metalleffektpigmenten, Perlgianzpigmenten, Interferenzpigmenten, goniochromatischen Pigmenten oder organischen Farbstoffen, organischen Pigmenten oder anderen Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Glimmer-, Glas-, Al₂O₃- und SiO₂-Plättchen, etc. verwendet werden können. Die erfindungsgemäßen Absorptionspigmente können in jedem Verhältnis mit handelsüblichen Pigmenten und Füllem gemischt werden.

Als Füllstoffe sind z.B. zu nennen natürlicher und synthetischer Glimmer, Nylon Powder, reine oder gefüllte Melaninharze, Talcum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe. Bezüglich der Partikelform des Füllstoffes gibt es keine Einschränkungen. Sie kann den Anforderungen gemäß z.B. plättchenförmig, sphärisch oder nadelförmig sein.

Selbstverständlich können die erfindungsgemäßen Absorptionspigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z.B. Verdicker und rheologische Zusatzstoffe, wie z.B. Bentonite, Hektorite, Siliciumdioxide, Ca-Silicate, Gelatinen, hochmolekulare Kohlenhydrate und/oder oberflächenaktive Hilfsmittel, etc.

Die die erfindungsgemäßen Absorptionspigmente enthaltenden Formulierungen können dem lipophilen, hydrophilen oder hydrophoben Typ angehören. Bei heterogenen Formulierungen mit diskreten wässrigen und nichtwässrigen Phasen können die erfindungsgemäßen Pigmente in jeweils nur einer der beiden Phasen enthalten oder auch über beide Phasen verteilt sein.

Die pH-Werte der Formulierungen können zwischen 1 und 14, bevorzugt zwischen 2 und 11 und besonders bevorzugt zwischen 5 und 8 liegen.

Den Konzentrationen der erfindungsgemäßen Absorptionspigmente in der Formulierung sind keine Grenzen gesetzt. Sie können - je nach Anwendungsfall - zwischen 0,001 (rinse-off-Produkte, z.B. Duschgele) - 100 % liegen. Die erfindungsgemäßen Absorptionspigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E, etc.), Selbstbräuner (z.B. DHA, Erytrolose, u.a.) sowie weitere kosmetische Wirkstoffe, wie z.B. Bisabolol, LPO, Ectoin, Emblica, Allantoin, Bioflavanoide und deren Derivate.

Die erfindungsgemäßen Absorptionspigmente sind weiterhin geeignet zur Herstellung von fließfähigen Pigmentpräparationen und Trockenpräparaten, insbesondere für Druckfarben und kosmetische Formulierungen, enthaltend ein oder mehrere erfindungsgemäße Absorptionspigmente, Bindemittel und optional ein oder mehrere Additive.

Gegenstand der Erfindung ist somit auch die Verwendung der erfindungsgemäßen Absorptionspigmente in Farben, Lacken, Druckfarben, Sicherheitsdruckfarben, Kunststoffen, keramischen Materialien, Gläsern, als Tracer, in kosmetischen Formulierungen und zur Herstellung von Pigmentpräparationen und Trockenpräparaten.

Die nachfolgenden Beispiele sollen die Erfindung näher erläutern ohne sie jedoch zu beschränken.

### Beispiele

### Beispiel 1

### Beispiel 1a

100 g Ronasphere® (SiO₂-Kugeln mit einer Partikelgröße von < 20 µm der Fa. Merck KGaA) werden in 1900 g VE-Wasser unter Rühren dispergiert, auf 80 °C erhitzt und mit 10 %iger Salzsäure auf pH-Wert 3,0 eingestellt. Nun werden 375 g Eisen(III)chloridlösung (Fe = 15%) zudosiert und durch gleichzeitige Zugabe von 32 %iger Natronlauge wird der pH-Wert konstant bei 3,0 gehalten. Der Bunttonwinkel wird mit dem MINOLTA-Farbmessgerät CR-300 gemessen. Die Suspension wird noch 30 min bei gleicher Temperatur und Rührgeschwindigkeit nachgerührt und danach der pH-Wert mit 32 %iger Natronlauge auf pH 7,5 eingestellt. Die Silikat-Schicht wird nun bei 80 °C und pH 7,5 unter Rühren - durch Zugabe von einer Mischung aus 167 g Natronwasserglas (Gehalt SiO₂ =27 %) und 167 g VE-Wasser - mit einer Dosierrate von 1,56 ml/min aufgebracht. Der pH-Wert wird während der Belegung mit 10 %iger Salzsäure konstant gehalten, am Ende der Belegung die Suspension noch 15 min nachgerührt und anschließend der pH-Wert auf 6,0 eingestellt. Die Suspension wird bis zu ihrer nächsten Verwendung beiseite gestellt.

### Beispiel 1b

72 g Levasil® 200 in Dispersion (30 %) (SiO₂-Kugeln mit einer Partikelgröße von 10-80 nm der Fa. Bayer AG) werden mit 3528 ml VE-Wasser unter Rühren verdünnt, auf 90 °C erhitzt und mit 10 %iger Salzsäure der pH-Wert auf 2,8 eingestellt. Nun werden 855 g einer Eisen(III)chloridlösung (Fe = 15%) zudosiert und durch gleichzeitige Zugabe von 32 %iger Natronlauge wird der pH-Wert bei 2,8 konstant gehalten. Der Bunttonwinkel der Suspension beträgt dann 33,7°. Der Bunttonwinkel wird mit dem MINOLTA-Farbmessgerät CR-300 gemessen. Die Suspension wird noch 30 min bei gleicher Temperatur und Rührgeschwindigkeit nachgerührt und danach der pH-Wert mit 32 %iger Natronlauge auf pH 7,5 eingestellt. Die Silikat-Schicht wird nun bei 90 °C und pH 7,5 unter Rühren - durch Zugabe von einer Mischung, bestehend aus 76,0 g Natronwasserglas (Gehalt SiO₂ = 27%) und 76 ml VE-Wasser, mit einer Dosierrate von 1,8 ml/min - aufgebracht. Der pH-Wert wird während der Belegung mit 10 %iger Salzsäure konstant gehalten. Am Ende der Belegung wird die Suspension noch 15 min nachgerührt und anschließend der pH-Wert auf 6,0 eingestellt.

Die gesamte Ronasphere®-Suspension wird mit der gesamten Levasil®-Suspension gemischt. Man läßt absitzen, abkühlen und dekantiert die überstehende klare Lösung ab. Der Bodenkörper wird aufgerührt, über eine Nutsche abfiltriert, mit VE-Wasser salzfrei gewaschen, bei 110 °C getrocknet und anschließend 30 min bei 825 °C geglüht. Man erhält ein rotes Pulver mit einem Gehalt an Eisen(III)oxid von 59 %.

### Beispiel 2

### Beispiel 2a

90 g Ronasphere® werden in 1710 g VE-Wasser unter Rühren dispergiert, auf 75 °C erhitzt und mit 10 %iger Salzsäure ein pH-Wert von 2,2 eingestellt. Es werden nun 1076 g einer Titantetrachloridlösung (Gehalt = 30 %) zudosiert. Der pH-Wert wird dabei mit 32 %iger Natronlauge bei 2,2 konstant gehalten. Die Dosierung wird nach 60 min unterbrochen, der pH-Wert auf 3,2 gestellt und die Dosierung fortgesetzt. Nach beendeter Zugabe wird 30 min nachgerührt. Für das Aufbringen der Silikat-Schicht wird der pH-Wert innerhalb von 30 min. auf 7,5 gestellt und danach die Beschichtung wie folgt gestartet: Eine Lösung - bestehend aus 167,1 g Natronwasserglas (Gehalt SiO₂ = 27 %) und 167,1 g VE-Wasser-wird unter Rühren bei 75 °C mit 1,15 ml/min zudosiert und gleichzeitig der pH-Wert durch Zugabe von 10 %iger Salzsäure konstant auf 7,5 gehalten. Nach vollständiger Zugabe der Natronwasserglaslösung wird 30 min nachgerührt, anschließend der pH-Wert mit Salzsäure innerhalb von 30 min auf pH 6,0 gestellt und weitere 30 min nachgerührt.
Diese Suspension wird bis zu ihrer nächsten Verwendung beiseite gestellt.

### Beispiel 2 b

100,6 g Levasil®-Dispersion (30 %) werden in 5083 ml VE-Wasser unter Rühren dispergiert, auf 85 °C erhitzt und mit 10 %iger Salzsäure ein pH-Wert von 1,8 eingestellt. Es werden nun 1556,0 g Titantetrachloridlösung (Gehalt = 30 %) zudosiert. Der pH-Wert wird dabei mit 32 %iger Natronlauge bei 1,8 konstant gehalten. Die Dosierung wird nach 60 min unterbrochen, der pH-Wert auf 2,2 gestellt und die Dosierung fortgesetzt, wobei in den ersten 30 min mit 4,3 ml/min und danach mit 8,6 ml/min dosiert wird. Die Dosierung wird beendet, nachdem der L-Wert der Suspension innerhalb der letzten 20 min nicht mehr gestiegen ist. Der L-Wert der Suspension wird mit dem Minolta-Farbmessgerät CR-300 gemessen. Nun wird 30 min nachgerührt. Für das Aufbringen der Silikat-Schicht wird der pH-Wert innerhalb von 30 min auf 7,5 gestellt und danach die Beschichtung wie folgt gestartet: Eine Lösung - bestehend aus 167,1 g Natronwasserglas (Gehalt SiO₂ = 27 %) und 167 ml VE-Wasser - wird unter Rühren bei 85 °C mit 2,8 ml/min zudosiert und gleichzeitig der pH-Wert durch Zugabe von 10 %iger Salzsäure konstant auf 7,5 gehalten. Nach vollständiger Zugabe der Natronwasserglaslösung wird 30 min nachgerührt, anschließend der pH-Wert mit Salzsäure innerhalb von 30 min auf pH 6,0 gestellt und weitere 30 min nachgerührt.

Die gesamte Ronasphere®-Suspension wird der gesamten Levasil®-Suspension zugemischt, diese Suspension läßt man absitzen und abkühlen. Die überstehende klare Lösung wird abdekantiert. Der Bodenkörper wird aufgerührt, über eine Nutsche abfiltriert, mit VE-Wasser salzfrei gewaschen, bei 110 °C getrocknet und anschließend 30 min bei 600 °C geglüht. Man erhält ein weißes Pulver mit einem Gehalt an Titandioxid von 61 %.

### Beispiel 3

### Beispiel 3a

150 g Ronasphere® werden in 1850 g VE-Wasser unter Rühren dispergiert und auf 85 °C temperiert. Während der gesamten Belegung, Nachreaktion und pH-Wert-Einstellung wird Sauerstoff in die Suspension eingeleitet. Durch tropfenweise Zugabe von 20 %iger Schwefelsäure wird der pH-Wert auf 3,5 eingestellt. Im Anschluß daran wird die Eisen(II/III)sulfatlösung - bestehend aus 99,8 g Eisen(III)sulfät (80 %) sowie 111,1 g Eisen(II)sulfat Heptahydrat und 389 g VE-Wasser - zudosiert. Der pH-Wert wird dabei mit 32 %iger Natronlauge bei 3,5 konstant gehalten. Die Dosierung wird solange fortgesetzt, bis der Bunttonwinkel der Suspension - der anfangs stetig steigt - zu fallen beginnt. Der Bunttonwinkel wird mit dem MINOLTA-Farbmessgerät CR-300 gemessen. Die Suspension wird noch 60 min bei gleicher Temperatur und Rührgeschwindigkeit nachgerührt, der pH-Wert mit 32 %iger Natronlauge - innerhalb von 60 min - auf pH 7,5 eingestellt und weitere 30 min der pH-Wert nachgeregelt. Die Sauerstoffeinleitung wird beendet, und es wird mit der Silikatbelegung begonnen. Dazu wird bei 85 °C, pH 7,5 und unter Rühren - durch Zugabe einer Lösung bestehend aus 163,8 g Natronwasserglas (Gehalt SiO₂ = 27 %) und 164 ml VE-Wasser- mit einer Dosierrate von 1,9 ml/min die Silikat-Schicht aufgebracht. Der pH-Wert wird während der Belegung mit 20 %iger Schwefelsäure auf 7,5 konstant gehalten. Am Ende der Belegung wird die Suspension noch 15 min nachgerührt und anschließend der pH-Wert auf 6,0 eingestellt. Die Suspension wird bis zu ihrer nächsten Verwendung beiseite gestellt.

### Beispiel 3b

66 g Levasil®-Dispersion werden in 3234 ml VE-Wasser unter Rühren dispergiert und auf 80°C temperiert. Während der gesamten Belegung, Nachreaktion und pH-Wert Einstellung wird Sauerstoff in die Suspension eingeleitet. Durch tropfenweise Zugabe von 20 %iger Schwefelsäure wird der pH-Wert auf 3,5 eingestellt. Im Anschluß daran wird die Eisen(II/III)sulfatlösung - bestehend aus 282,2 g Eisen(III)sulfat 80 %, sowie 314,2 g Eisen(II)sulfat · Heptahydrat und 1100 ml VE-Wasserinnerhalb der ersten 10 min mit einer Dosierrate von 0,9 ml/min zudosiert. Der pH-Wert wird dabei mit 32 %iger Natronlauge bei 3,5 konstant gehalten. Die Dosiergeschwindigkeit wird sukzessive erhöht, d.h. für weitere 10 min auf 1,8 ml/min, dann 2,7 ml/min und zum Schluß auf 3,6 ml/min. Die Dosierung wird solange fortgesetzt bis der Bunttonwinkel der Suspension - der anfangs stetig steigt - zu fallen beginnt. Der Bunttonwinkel wird mit dem MINOLTA-Farbmessgerät CR-300 gemessen. Die Suspension wird noch 60 min bei gleicher Temperatur und Rührgeschwindigkeit nachgerührt, der pH-Wert mit 32 %iger Natronlauge - innerhalb von 60 min - auf pH 7,5 eingestellt und weitere 30 min der pH-Wert nachgeregelt. Die Sauerstoffeinleitung wird beendet und mit der Silikatbelegung begonnen. Dazu wird bei 80 °C, pH 7,5 und unter Rühren - durch Zugabe einer Lösung bestehend aus 163,6 g Natronwasserglas (Gehalt SiO₂ = 27 %) und 164 ml VE-Wasser - mit einer Dosierrate von 1,9 ml/min die Silikat-Schicht aufgebracht. Der pH-Wert wird während der Belegung mit 20 %iger Schwefelsäure auf 7,5 konstant gehalten, am Ende der Belegung die Suspension noch 15 min nachgerührt und anschließend der pH-Wert auf 6,0 eingestellt.

Die gesamte Ronasphere®-Suspension wird der gesamten Masse an Levasil®-Suspension zugemischt. Diese Suspension läßt man absitzen und abkühlen und die überstehende klare Lösung wird abdekantiert. Der Bodenkörper wird aufgerührt, über eine Nutsche abfiltriert, mit VE-Wasser salzfrei gewaschen, bei 110 °C getrocknet und über ein 100 µm Sieb gegeben. Man erhält ein gelbes Pulver mit einem Gehalt an Eisenoxidhydroxid von 51 %.

### Beispiel 4

### Beispiel 4a

100 g Ronasphere® werden in 1900 g VE-Wasser unter Rühren dispergiert, auf 75 °C erhitzt und mit 10 %iger Salzsäure der pH-Wert auf 2,8 eingestellt. Nun werden 1425 g Eisen(III)chloridlösung (Fe= 7,5 %) zudosiert und durch gleichzeitige Zugabe von 32 %iger Natronlauge der pH-Wert konstant gehalten. Die Suspension wird noch 30 min bei gleicher Temperatur und Rührgeschwindigkeit nachgerührt und danach der pH-Wert mit 32 %iger Natronlauge auf pH 7,5 eingestellt. Die Silikat-Schicht wird nun bei 75 °C und pH 7,5 unter Rühren - durch Zugabe von einer Mischung aus 93,6 g Natronwasserglas (Gehalt SiO₂ = 27%) und 93,6 g VE-Wasser - mit einer Dosierrate von 1,75 ml/min aufgebracht. Der pH-Wert wird während der Belegung mit 10 %iger Salzsäure konstant gehalten, am Ende der Belegung die Suspension noch 15 min nachgerührt und anschließend der pH-Wert auf 6,0 eingestellt. Die Suspension wird bis zu ihrer nächsten Verwendung beiseite gestellt.

### Beispiel 4b

76,7 g Levasil®-Dispersion (30 %) werden mit 3871 g VE-Wasser unter Rühren verdünnt, auf 75 °C erhitzt und mit 10 %iger Salzsäure wird der pH-Wert auf 2,8 eingestellt. Nun werden 2146,6 g Eisen(III)chloridlösung (Fe = 7,5 %) zudosiert und durch gleichzeitige Zugabe von 32 %iger Natronlauge der pH-Wert bei 2,8 konstant gehalten. Die Suspension wird noch 30 min bei gleicher Temperatur und Rührgeschwindigkeit nachgerührt und danach der pH-Wert mit 32 %iger Natronlauge auf pH 7,5 eingestellt. Die Silikat-Schicht wird nun bei 75 °C und pH 7.5 unter Rühren - durch Zugabe von einer Mischung aus 93,8 g Natronwasserglas (Gehalt SiO₂ = 27 %) und 94 g VE-Wasser mit einer Dosierrate von 3,4 ml/min - aufgebracht. Der pH-Wert wird während der Belegung mit 10 %iger Salzsäure konstant gehalten, am Ende der Belegung die Suspension noch 15 min nachgerührt und anschließend der pH-Wert auf 6,0 eingestellt.

Die gesamte Ronasphere®-Suspension wird mit der gesamten Levasil®-Suspension gemischt und nach dem Absitzen wird die überstehende klare Lösung abdekantiert. Der Bodenkörper wird aufgerührt, über eine Nutsche abfiltriert, mit VE-Wasser salzfrei gewaschen und bei 110 °C getrocknet. Man erhält ein rostrotes Pigment. 100 g dieses Pigmentes werden in ein Quarzglasschiffchen gefüllt und in einen Quarzofen überführt. Bei 500 °C erfolgt 30 min die Reduktion unter Formiergas (8 % H₂ / 92 % N₂). Nach der Glühung wird das Schiffchen mit dem Pigment aus dem Ofen genommen. Man erhält ein schwarzes Pulver mit einem Gehalt an Magnetit (Fe₃O₄) von 68 %.

### Beispiel 5

### Beispiel 5a

100 g Ronasphere® werden in 1900 g VE-Wasser unter Rühren dispergiert, auf 80 °C erhitzt und mit 10 %iger Salzsäure wird der pH-Wert auf 3,0 eingestellt. Nun werden 375 g Eisen(III)chloridlösung (Fe = 15 %) zudosiert und durch gleichzeitige Zugabe von 32 %iger Natronlauge der pH-Wert konstant bei 3,0 gehalten. Der Bunttonwinkel der Suspension beträgt dann 39°. Der Bunttonwinkel wird mit dem MINOLTA-Farbmessgerät CR-300 gemessen. Die Suspension wird noch 30 min bei gleicher Temperatur und Rührgeschwindigkeit nachgerührt und danach der pH-Wert mit 32 %iger Natronlauge auf pH 7,5 eingestellt. Die Silikat-Schicht wird nun bei 80 °C und pH 7,5 unter Rühren - durch Zugabe von einer Mischung aus 167 g Natronwasserglas (Gehalt SiO₂ = 27 %) und 167 g VE-Wasser - mit einer Dosierrate von 1,56 ml/min aufgebracht. Der pH-Wert wird während der Belegung mit 10 %iger Salzsäure konstant gehalten, am Ende der Belegung die Suspension noch 15 min nachgerührt und anschließend der pH-Wert auf 6,0 eingestellt. Die Suspension wird bis zu ihrer nächsten Verwendung beiseite gestellt.

### Beispiel 5b

63,0 g Levasil®-Dispersion (30 %) werden in 1471 g VE-Wasser unter Rühren dispergiert, auf 85 °C erhitzt und mit 10 %iger Salzsäure wird ein pH-Wert von 1,8 eingestellt. Es werden nun 1538,9 g TitantetrachloridLösung (30 %) innerhalb der ersten 60 min mit einer Dosierrate von 1,3 ml/min zudosiert. Der pH-Wert wird dabei mit 32 %iger Natronlauge bei 1,8 konstant gehalten. Die Dosierung wird nach 60 min unterbrochen, der pH-Wert auf 2,2 gestellt und die Dosierung fortgesetzt. Nach beendeter Zugabe wird 30 min nachgerührt. Für das Aufbringen der Silikat-Schicht wird der pH-Wert innerhalb von 30 min auf 7,5 gestellt und danach die Beschichtung wie folgt gestartet: Eine Lösung - bestehend aus 139,2 g Natronwasserglas (Gehalt SiO₂ = 27 %) und 139,2 g VE-Wasser - wird unter Rühren bei 85 °C mit 2,4 ml/min zudosiert und gleichzeitig der pH-Wert durch Zugabe von 10 %iger Salzsäure konstant auf 7.5 gehalten. Nach vollständiger Zugabe der Natronwasserglaslösung wird 30 min nachgerührt, anschließend der pH-Wert mit Salzsäure innerhalb von 30 min auf pH 6,0 gestellt und weitere 30 min nachgerührt.

Die gesamte Ronasphere®-Suspension wird mit der gesamten Levasil®-Suspension gemischt und die überstehende klare Lösung abdekantiert. Der Bodenkörper wird aufgerührt, über eine Nutsche abfiltriert, mit VE-Wasser salzfrei gewaschen, bei 110 °C getrocknet und anschließend 30 min bei 825 °C geglüht. Man erhält ein rosafarbenes Pulver mit einem Gehalt an Eisen(III)oxid von 18 % und Titandioxid von 37 %.

## Patentansprüche

1. Sphärische Absorptionspigmente, **dadurch gekennzeichnet, dass** sie
- eine Komponente A basierend auf sphärischen Teilchen mit einer Partikelgröße von 1-100 nm, die mit einer oder mehreren farbgebenden Schichten belegt sind und eine Deckschicht aus SiO₂ aufweisen,
und
- eine Komponente B basierend auf sphärischen Teilchen mit einer Partikelgröße von 0,5-50 µm, die mit einer oder mehreren farbgebenden Schichten belegt sind und eine Deckschicht aus SiO₂ aufweisen
enthalten.

2. Sphärische Absorptionspigmente nach Anspruch 1, **dadurch gekennzeichnet, dass** es sich bei den sphärischen Teilchen um SiO₂-Kugeln, TiO₂-Kugeln, nanoskalige Metallpartikel, Polymer-Kugeln, Glas-Kugeln und/oder Glashohl-Kugeln handelt.

3. Sphärische Absorptionspigmente nach Anspruch 1 oder 2, **dadurch gekennzeichnet, dass** sowohl Komponente A als auch Komponente B auf SiO₂-Kugeln basieren.

4. Sphärische Absorptionspigmente nach einem der Ansprüche 1 bis 3, **dadurch gekennzeichnet, dass** es sich bei den farbgebenden Schichten um Schichten aus Metalloxiden, Metallsulfiden, Metallnitriden, Metalloxynitriden, Metallen oder deren Gemische handelt.

5. Sphärische Absorptionspigmente nach Anspruch 4, **dadurch gekennzeichnet, dass** es sich bei der farbgebenden Schicht um TiO₂. ZrO₂, SnO₂, ZnO, BiOCl, Ce₂O₃, FeO(OH), Fe₂O₃, Fe₃O₄, TiFe₂O₅, Cr₂O₃, Fe₄[Fe(CN)₆]₃, Titansuboxide (TiO₂ teilweise reduziert mit

6. Sphärische Absorptionspigmente nach einem der Ansprüche 1 bis 5, **dadurch gekennzeichnet, dass** die Komponente A und/oder Komponente B ein, zwei drei, vier, fünf oder sieben farbgebende Schichten enthält. Oxidationszahlen von < 4 bis 2 wie die niederen Oxide Ti₃O₅, Ti₂O₃ bis zu TiO), Titanoxynitride, Pseudobrookit, sowie Titannitrid, CoO, Co₃O₄, VO₂, V₂O₃, NiO, CoAl₂O₄, BiVO₄, Ce₂S₃, MoS₂, Al, Fe, Cr, As, Au, Pt, Pd oder deren Gemische handelt.

7. Sphärische Absorptionspigmente nach Anspruch 6, **dadurch gekennzeichnet, dass** Komponente A und/oder Komponente B eine, zwei oder drei farbgebende Schichten enthält.

8. Sphärische Absorptionspigmente nach einem der Ansprüche 1 bis 7, **dadurch gekennzeichnet, dass** es sich bei den farbgebenden Schichten bei Komponente A und Komponente B jeweils um eine oder mehrere Metalloxidschichten handelt.

9. Sphärische Absorptionspigmente nach Anspruch 8, **dadurch gekennzeichnet, dass** es sich bei den Metalloxiden um TiO₂, Fe₂O₃, Fe₃O₄, FeO(OH), Eisentitanate, Pseudobrookit oder deren Gemische handelt.

10. Sphärische Absorptionspigmente nach einem der Ansprüche 1 bis 9, **dadurch gekennzeichnet, dass** Komponente A und Komponente B im Verhältnis 1 : 10 bis 10 :1 gemischt werden.

11. Sphärische Absorptionspigmente nach einem der Ansprüche 1 bis 10, **dadurch gekennzeichnet, dass** sie zur Erhöhung der Licht-, Temperatur- und Wetterstabilität zusätzlich eine äußere Schutzschicht aufweisen.

12. Verfahren zur Herstellung der sphärischen Absorptionspigmente nach einem der Ansprüche 1 bis 10, **dadurch gekennzeichnet, dass** die sphärischen Basissubstrate der Komponenten A und B in Suspension miteinander gemischt werden und die Beschichtung der sphärischen Substrate nass-chemisch durch hydrolytische Zersetzung von Metallsalzen in wässrigen und/oder organischen Lösemittel und/oder mittels CVD- und/oder PVD-Verfahren erfolgt oder durch Reduktion aus wässriger Lösung von Metallsalzen.

13. Verwendung der sphärischen Absorptionspigmente nach Anspruch 1 in Farben, Lacken, Druckfarben, Sicherheitsdruckfarben, Kunststoffen, keramischen Materialien, Gläsern, als Tracer, in kosmetischen Formulierungen und zur Herstellung von Pigmentpräparationen und Trockenpräparaten.

## Claims

1. Spherical absorption pigments, **characterised in that** they comprise
- a component A based on spherical particles having a particle size of 1-100 nm which are coated with one or more colour-providing layers and have a top layer of SiO₂
and
- a component B based on spherical particles having a particle size of 0.5-50 µm which are coated with one or more colour-providing layers and have a top layer of SiO₂.

2. Spherical absorption pigments according to Claim 1, **characterised in that** the spherical particles are SiO₂ beads, TiO₂ beads, nanoscale metal particles, polymer beads, glass beads and/or hollow glass beads.

3. Spherical absorption pigments according to Claim 1 or 2, **characterised in that** both component A and component B are based on SiO₂ beads.

4. Spherical absorption pigments according to one of Claims 1 to 3, **characterised in that** the colour-providing layers are layers of metal oxides, metal sulfides, metal nitrides, metal oxynitrides, metals or mixtures thereof.

5. Spherical absorption pigments according to Claim 4, **characterised in that** the colour-providing layer is TiO₂, ZrO₂, SnO₂, ZnO, BiOCl, Ce₂O₃, FeO(OH), Fe₂O₃, Fe₃O₄, TiFe₂O₅, Cr₂O₃, Fe₄[Fe(CN)₆]₃, titanium sub-oxides (TiO₂ partially reduced with oxidation states of < 4 to 2, such as the lower oxides Ti₃O₅, Ti₂O₃ to TiO), titanium oxynitrides, pseudobrookite and titanium nitride, CoO, Co₃O₄, VO₂, V₂O₃, NiO, CoAl₂O₄, BiVO₄, Ce₂S₃, MoS₂, Al, Fe, Cr, As, Au, Pt, Pd or mixtures thereof.

6. Spherical absorption pigments according to one of Claims 1 to 5, **characterised in that** component A and/or component B comprises one, two, three, four, five or seven colour-providing layers.

7. Spherical absorption pigments according to Claim 6, **characterised in that** component A and/or component B comprises one, two or three colour-providing layers.

8. Spherical absorption pigments according to one of Claims 1 to 7, **characterised in that** the colour-providing layers in component A and component B are each one or more metal-oxide layers.

9. Spherical absorption pigments according to Claim 8, **characterised in that** the metal oxides are TiO₂, Fe₂O₃, Fe₃O₄, FeO(OH), iron titanates, pseudobrookite or mixtures thereof.

10. Spherical absorption pigments according to one of Claims 1 to 9, **characterised in that** component A and component B are mixed in the ratio 1:10 to 10:1.

11. Spherical absorption pigments according to one of Claims 1 to 10, **characterised in that** they additionally have an outer protective layer in order to increase the light, temperature and weather stability.

12. Process for the preparation of the spherical absorption pigments according to one of Claims 1 to 10, **characterised in that** the spherical base substrates of components A and B are mixed with one another in suspension, and the coating of the spherical substrates is carried out by wet-chemical processes by hydrolytic decomposition of metal salts in aqueous and/or organic solvents and/or by means of CVD and/or PVD processes or by reduction from aqueous solution of metal salts.

13. Use of the spherical absorption pigments according to Claim 1 in paints, coatings, printing inks, security printing inks, plastics, ceramic materials, glasses, as tracers, in cosmetic formulations and for the preparation of pigment compositions and dry preparations.

## Revendications

1. Pigments d'absorption sphériques, **caractérisés en ce qu'**ils comprennent
- un composant A basé sur des particules sphériques présentant une dimension de particule de 1-100 nm, lesquelles particules sont revêtues d'une ou de plusieurs couches de fourniture de couleur et comportent une couche sommitale en SiO₂
et
- un composant B basé sur des particules sphériques présentant une dimension de particule de 0,5-50 µm, lesquelles particules sont revêtues d'une ou de plusieurs couches de fourniture de couleur et comportent une couche sommitale en SiO₂.

2. Pigments d'absorption sphériques selon la revendication 1, **caractérisés en ce que** les particules sphériques sont des perles en SiO₂, des perles en TiO₂, des particules métalliques de l'échelle des nanomètres, des perles en polymère, des perles en verre et/ou des perles en verre creuses.

3. Pigments d'absorption sphériques selon la revendication 1 ou 2, **caractérisés en ce que** le composant A et le composant B sont tous deux basés sur des perles en SiO₂.

4. Pigments d'absorption sphériques selon l'une des revendications 1 à 3, **caractérisés en ce que** les couches de fourniture de couleur sont des couches en oxydes métalliques, en sulfures métalliques, en nitrures métalliques, en oxynitrures métalliques, en métaux ou en mélanges afférents.

5. Pigments d'absorption sphériques selon la revendication 4, **caractérisés en ce que** la couche de fourniture de couleur est en TiO₂, ZrO₂, SnO₂, ZnO, BiOCl, Ce₂O₃, FeO(OH), Fe₂O₃, Fe₃O₄, TiFe₂O₅, Cr₂O₃, Fe₄[Fe(CN)₆]₃, en sous-oxydes de titane (TiO₂ partiellement réduit avec des états d'oxydation de < 4 à 2, tels que les oxydes d'ordre inférieur de Ti₃O₅, Ti₂O₃ à TiO), en oxynitrures de titane, en pseudobrookite et en nitrure de titane, en CoO, Co₃O₄, VO₂, V₂O₃, NiO, CoAl₂O₄, BiVO₄, Ce₂S₃, MoS₂, Al, Fe, Cr, As, Au, Pt, Pd ou en des mélanges afférents.

6. Pigments d'absorption sphériques selon l'une des revendications 1 à 5, **caractérisés en ce que** le composant A et/ou le composant B comprennent une, deux, trois, quatre, cinq or sept couches de fourniture de couleur.

7. Pigments d'absorption sphériques selon la revendication 6, **caractérisés en ce que** le composant A et/ou le composant B comprennent une, deux ou trois couches de fourniture de couleur.

8. Pigments d'absorption sphériques selon l'une des revendications 1 à 7, **caractérisés en ce que** les couches de fourniture de couleur dans le composant À et le composant B sont chacune une ou plusieurs couches d'oxyde métallique.

9. Pigments d'absorption sphériques selon la revendication 8, **caractérisés en ce que** les oxydes métalliques sont TiO₂, Fe₂O₃, Fe₃O₄, FeO(OH), titanates de fer, pseudobrookite ou des mélanges afférents.

10. Pigments d'absorption sphériques selon l'une des revendications 1 à 9, **caractérisés en ce que** le composant A et le composant B sont mélangés selon le rapport 1:10 à 10:1.

11. Pigments d'absorption sphériques selon l'une des revendications 1 à 10, **caractérisés en ce qu'**ils comportent de façon additionnelle une couche de protection externe afin d'augmenter la stabilité à la lumière, à la température et aux conditions météorologiques.

12. Procédé pour la préparation des pigments d'absorption sphériques selon l'une des revendications 1 à 10, **caractérisé en ce que** les substrats de base sphériques des composants A et B sont mélangés l'un avec l'autre en suspension, et le revêtement des substrats sphériques est mis en oeuvre au moyen de procédés chimiques par voie humide par décomposition hydrolytique de sels métalliques dans des solvants aqueux et/ou organiques et/ou au moyen de procédés CVD et/ou PVD ou par réduction à partir d'une solution aqueuse de sels métalliques.

13. Utilisation des pigments d'absorption sphériques selon la revendication 1 dans des peintures, des revêtements, des encres d'impression, des encres d'impression de sécurité, des matières plastiques, des matériaux de céramique, des verres, en tant que traceurs, dans des formulations cosmétiques et pour la préparation de compositions de pigments et de préparations à sec.
